(19) Europäisches Patentamt

European Patent Office

Office européen des brevets

(11) **EP 4 369 587 A1**

(12) **EUROPEAN PATENT APPLICATION**

(43) Date of publication:
**15.05.2024 Bulletin 2024/20**

(21) Application number: **22206008.9**

(22) Date of filing: **08.11.2022**

(51) International Patent Classification (IPC):
**H02M 3/335** $^{(2006.01)}$ **H05B 45/12** $^{(2020.01)}$
**H05B 45/24** $^{(2020.01)}$

(52) Cooperative Patent Classification (CPC):
**H02M 3/33553; H05B 45/30; H05B 45/382;**
H02M 3/33523; H05B 45/24

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Tridonic GmbH & Co. KG 6851 Dornbirn (AT)**

(72) Inventor: **Netzer, Harald 6850 Dornbirn (AT)**

(74) Representative: **Rupp, Christian et al Mitscherlich PartmbB Patent- und Rechtsanwälte Karlstraße 7 80333 München (DE)**

(54) **LOAD CURRENT/VOLTAGE SENSING FOR ISOLATED POWER CONVERTER**

(57) Disclosed is an isolated power converter (1) for supplying an LED load (3). The converter (1) comprises a first transformer (1101, 1201) for an inductive power transfer from a primary-side circuit (11) to a secondary-side circuit (12); and a second transformer (1102, 1202) for an inductive signal transfer of an oscillation signal (1203, 1103) from the secondary-side circuit (12) to the primary-side circuit (11). The primary-side circuit (11) comprises a switching circuit (1104) for intermittent power input from a direct-current, DC, power source (1105) of the converter (1) in accordance with an actuating variable (1106) of the converter (1); and a control circuit (1107) for providing the actuating variable (1106) of the converter (1) in accordance with an indication (1103', 1103) of a controlled variable (1204) of the converter (1) and an indication (1103") of a reference variable of the converter (1). The secondary-side circuit (12) comprises a voltage-controlled oscillator, VCO (1205), for providing the oscillation signal (1203, 1103) having a frequency in accordance with a magnitude of a voltage (1206, 1206') being indicative of the controlled variable (1204) of the converter (1); and a sensing circuit (1207) for providing the voltage (1206, 1206') being indicative of the controlled variable (1204) of the converter (1). This achieves a secondary-side sensing of an output current (or voltage) at a reasonable price with acceptable accuracy.

FIG. 5

EP 4 369 587 A1

## Description

### Technical Field

The present disclosure relates to lighting technology, and more specifically to an isolated electric power converter for supplying a light emitting device (LED) load, as well as to an LED driver comprising such an isolated power converter. "Isolated" is to be understood as comprising an isolation barrier, typically a transformer.

### Background Art

Exemplary isolated topologies of LED drivers/gears include half-bridge resonant converters, flyback converters, or buck (i.e., step-down) converters being located on a secondary side of an intermediate DC/DC stage.

The driver's controller for regulation of a constant output current or a constant output voltage is usually arranged on a primary side with respect to the isolation barrier.

Since a required sensing accuracy of e.g. +/-3% of the load current/voltage cannot be achieved by a primary-side sensing, there is a need for a secondary-side sensing and a feedback of the load current/voltage to the primary side. This can be done e.g. by a transformer (if the sensed signal is of AC type) or via optocoupler solutions.

Transformer solutions have the drawback that they do not work if the signal that is to be sensed is of DC type (e.g. the DC output current flowing through the LED). Additionally they are expensive and need quite a lot of space.

Optocoupler solutions have the drawback that the transfer characteristics of optocouplers are subject to large tolerances and temperature dependency.

Depending on the solution the accuracy may be low and/or a cost may be high.

### Summary

In view of the above-mentioned drawbacks and limitations, the present disclosure seeks to achieve a secondary-side sensing of an output current (or voltage) at a reasonable price with acceptable accuracy.

The objective is achieved by the embodiments as defined by the appended independent claims. Preferred embodiments are set forth in the dependent claims and in the following description and drawings.

A first aspect of the present disclosure relates to an isolated power converter for supplying an LED load. The converter comprises a first transformer for an inductive power transfer from a primary-side circuit to a secondary-side circuit; and a second transformer for an inductive signal transfer of an oscillation signal from the secondary-side circuit to the primary-side circuit. The primary-side circuit comprises a switching circuit for intermittent power input from a direct-current, DC, power source of the converter in accordance with an actuating variable of the converter; and a control circuit for providing the actuating variable of the converter in accordance with an indication of a controlled variable of the converter and an indication of a reference variable of the converter. The secondary-side circuit comprises a voltage-controlled oscillator, VCO, for providing the oscillation signal having a frequency in accordance with a magnitude of a voltage being e.g. indicative of the controlled variable of the converter; and a sensing circuit for providing the voltage being indicative of the controlled variable of the converter.

The frequency of the oscillation signal may be proportionate to the magnitude of the voltage.

The indication of the controlled variable of the converter may be proportionate to the frequency of the oscillation signal.

The indication of the controlled variable of the converter and the indication of the reference variable of the converter may respectively comprise one of: magnitude values, and frequency values.

The sensing circuit may further comprise an operational amplifier upstream of the VCO.

The sensing circuit may further comprise a low-pass filter upstream of the operational amplifier.

The controlled variable of the converter may comprise a load voltage; and the sensing circuit may comprise a resistive voltage divider being arranged in parallel to the LED load.

The controlled variable of the converter may comprise a load current; and the sensing circuit may comprise a shunt resistor being arranged in series to the LED load.

The actuating variable of the converter may comprise a switching frequency.

The control circuit may comprise a lookup table for providing the actuating variable of the converter in accordance with the frequency of the oscillation signal and a given type of the controlled variable of the converter.

The oscillation signal may comprise one of: a square-wave signal, and a sine-wave signal.

The oscillation signal may have an unipolar magnitude; or the oscillation signal may have a bipolar magnitude and the converter may further comprise a diode interposed between the second transformer and the control circuit.

The converter may comprise a flyback converter; and the switching circuit may comprise a single switch.

The converter may comprise a resonant converter; the switching circuit may comprise a half-bridge of series-connected switches being operable in alternation; and the primary-side circuit may further comprise a resonant tank circuit.

A second aspect of the present disclosure relates to an LED driver, comprising an isolated power converter according to the first aspect or any of its implementations for supplying an LED load.

**Advantageous Effects**

The present disclosure provides a secondary-side output current (or voltage) sensing at a reasonable price with acceptable accuracy.

**Brief Description of Drawings**

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.

FIG. 1 illustrates a block diagram of an exemplary isolated LED driver 2 in accordance with the present disclosure;

FIG. 2 illustrates a block diagram of an exemplary control loop of an isolated converter 1 in accordance with the present disclosure;

FIGs. 3 and 4 respectively illustrate sensing circuits 1207 in accordance with the present disclosure;

FIG. 5 illustrates a feedback path in accordance with the present disclosure;

FIGs. 6 and 7 respectively illustrate example waveforms for different VCO output voltage ranges; and

FIG. 8 illustrates a measurement of an oscillation period of an indication 1103', 1103 of a controlled variable 1204 of an isolated converter 1 in accordance with the present disclosure;

**Detailed Descriptions of Drawings**

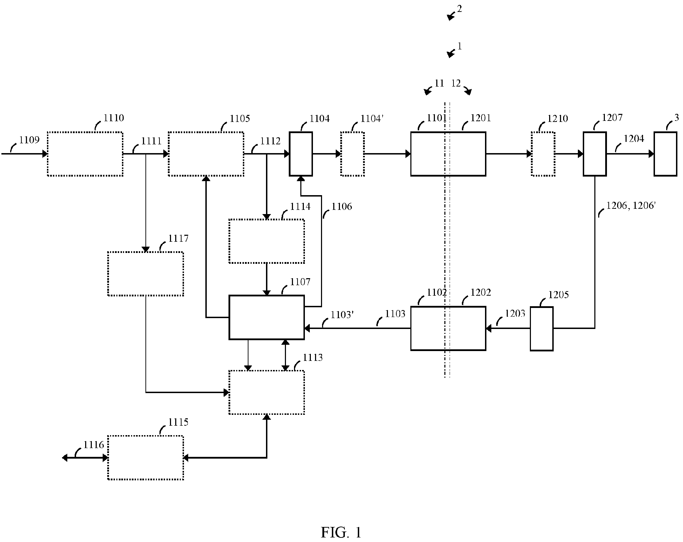

FIG. 1 illustrates a block diagram of an exemplary isolated LED driver 2 in accordance with the present disclosure.

The LED driver 2 comprises an isolated power converter 1 according to the first aspect of the present disclosure or any of its implementations. The isolated power converter 1 is designed for supplying an LED load 3, and with respect to its isolation barrier includes a primary-side circuit 11 and a secondary-side circuit 12.

Starting at a power inlet, the converter 1 may comprise a rectifier and filter circuit 1110 for rectifying and EMI-filtering of an alternating-current (AC) mains voltage 1109.

Progressing along a power path, the converter 1 may further comprise a direct-current (DC) power source 1105, such as a DC/DC power factor correction (PFC) stage based on a boost topology, for providing a constant bus voltage 1112, $V_{bus}$.

Further along the power path, a primary-side circuit 11 of the converter 1 comprises a switching circuit 1104 for intermittent power input from the DC power source 1105 of the converter 1 in accordance with an actuating variable 1106 of the converter 1.

The actuating variable 1106 of the converter 1 may comprise a switching frequency.

As shown in FIG. 1, the converter 1 may comprise a resonant converter 1. In that case, the switching circuit 1104 may comprise a half-bridge of series-connected switches being operable in alternation; and the primary-side circuit 11 may further comprise a resonant tank circuit 1104' such as an LCC circuit topology (for a current source) or an LLC circuit topology (for a voltage source) further along the power path.

Alternatively to the resonant topology of FIG. 1, the converter 1 may comprise a flyback converter 1, in which case the switching circuit 1104 may comprise a single switch and the primary-side circuit 11 may further comprise an inductor 1104' further along the power path.

Irrespective of the actual topology, the converter 1 thus comprises a first transformer 1101, 1201 for an inductive power transfer from the primary-side circuit 11 to the secondary-side circuit 12 of the converter 1.

Further along the power path, the secondary-side circuit 12 may further comprise a further rectifier and filter circuit 1210 for rectifying and filtering the output current 1204 being fed to the LED load 3.

In the case of output current regulation, the output current 1204 flowing through the LED load 3 may be sensed and the actuating variable 1106 of the converter 1 may be provided using an approach as will be described in the following.

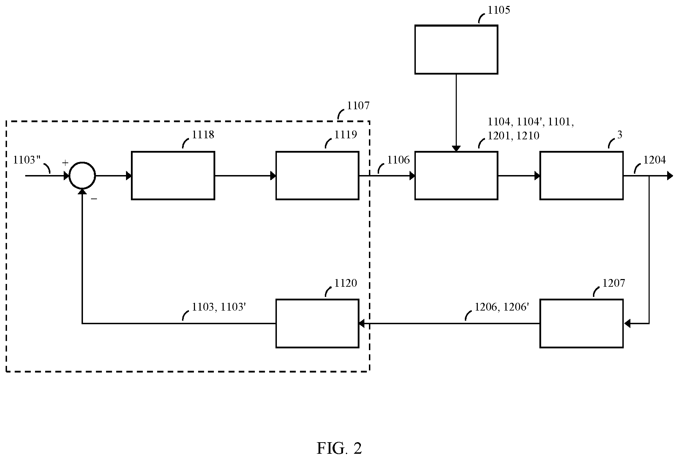

The converter 1 further comprises a control circuit 1107, such as an application-specific integrated circuit (ASIC) or a microcontroller (μC), for providing the actuating variable 1106 of the converter 1 in accordance with an indication 1103', 1103 of a controlled variable 1204 of the converter 1 and an indication 1103" (Fig. 2) of a reference variable of the converter 1.

The indication 1103', 1103 of the controlled variable 1204 of the converter 1 and the indication 1103" of the reference variable of the converter 1 may respectively comprise one of: magnitude values, and frequency values.

The indication 1103', 1103 of the controlled variable 1204 of the converter 1 may be proportionate to a frequency of an oscillation signal 1203, 1103.

Regressing along a feedback path, the converter 1 further comprises a second transformer 1102, 1202 for an inductive signal transfer of said oscillation signal 1203, 1103 from the secondary-side circuit 12 to the primary-side circuit 11. In particular, the second transformer 1102, 1202 may be designed for the inductive signal transfer of the oscillation signal 1203, 1103 having a frequency preferably between 1 MHz and 2 MHz.

The oscillation signal 1203, 1103 may comprise one of: a square-wave signal, and a sine-wave signal.

Further against the feedback path, the secondary-side circuit 12 further comprises a voltage-controlled oscillator, VCO 1205, for providing the oscillation signal 1203, 1103 having a frequency in accordance with a magnitude of a voltage 1206, 1206' being indicative of the controlled variable 1204 of the converter 1. In particular, the frequency of the oscillation signal 1203, 1103 may be proportionate to the magnitude of the voltage 1206, 1206' being indicative of the controlled variable 1204 of the converter 1.

Further against the feedback path, the secondary-side circuit 12 further comprises a sensing circuit 1207 for providing the voltage 1206, 1206' being indicative of the controlled variable 1204 of the converter 1.

Off the power and feedback paths, the primary side 11 of the converter 1 may further comprise, in accordance with FIG. 1, a microcontroller 1113, a low-voltage power supply (LVPS) stage 1114 for the switching circuit 1104, control circuit 1107 and the microcontroller 1113, an interface circuit 1115 for communications between the microcontroller 1113 and a lighting control bus 1116 such as a Digital Addressable Lighting Interface (DALI) bus, as well as a mains voltage monitoring circuit 1117 for mains voltage monitoring by the microcontroller 1113.

FIG. 2 illustrates a block diagram of an exemplary control loop of an isolated converter 1 in accordance with the present disclosure.

The controlled variable 1204 of the converter 1 may comprise a load voltage (across the LED load 3) or a load current (through the LED load 3).

The feedback loop comprises a sensing circuit 1207 for providing a voltage 1206, 1206' being indicative of the controlled variable 1204 of the converter 1.

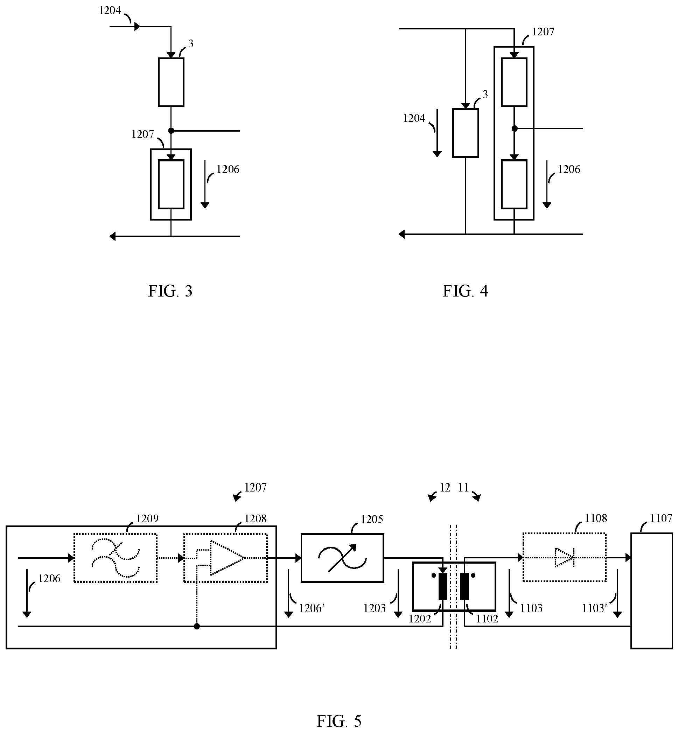

The feedback loop further comprises further elements discussed in connection with FIG. 5 below and an analog/digital converter (ADC) 1120 for providing an indication 1103', 1103 of the controlled variable 1204 of the isolated converter 1.

As previously mentioned, the control circuit 1107 is designed for providing the actuating variable 1106 of the converter 1 in accordance with the indication 1103', 1103 of the controlled variable 1204 of the converter 1 (i.e., the sensed value) and the indication 1103" of a reference variable of the converter 1 (i.e., the target value).

The feedback loop may further comprise a proportional-integral, PI, controller 1118 for providing a drive control signal in accordance with an error of the target value 1103" and the sensed value 1103'.

The feedback loop may further comprise a driver circuit 1119 for actuating the system under control (i.e., plant) 1104, 1104', 1101, 1201, 1210 (see FIG. 1) in accordance with the drive control signal provided by the PI controller 1118.

According to FIG. 1, the system under control (i.e., plant) 1104, 1104', 1101, 1201, 1210 comprises the switching circuit 1104, the resonant tank circuit (or inductor) 1104' and the first transformer 1101, 1201, and may comprise the rectifier and filter circuit 1210.

The switching circuit 1104 is designed for intermittent power input from the DC power source 1105 of the converter 1 in accordance with the actuating variable 1106 of the converter 1, which may comprise a switching frequency of the switching circuit 1104.

For practical reasons, the control circuit 1107 may comprise a lookup table for providing the actuating variable 1106 of the converter 1 in accordance with the frequency of the oscillation signal 1203, 1103 and a given type of the controlled variable 1204 (i.e., load current or load voltage) of the converter 1.

The switching circuit 1104 may thus be operated at this frequency/period (with a constant duty cycle of e.g. 50%), and a load current or load voltage equivalent to the target value will emerge.

FIGs. 3 and 4 respectively illustrate sensing circuits 1207 in accordance with the present disclosure.

On the one hand, if the controlled variable 1204 of the converter 1 comprises a load current as shown in FIG.

3, then the sensing circuit 1207 may comprise a shunt resistor being arranged in series to the LED load 3.

As used herein, a shunt may refer to a device that creates a low-resistance path for electric current, to allow it to pass around another portion of the circuit.

In response to the load current (i.e., controlled variable) 1204, $I_{LED}$, a (shunt) voltage 1206 being indicative of said load current will emerge across the shunt resistor $R_s$.

The shunt voltage 1206, $V_{shunt}$ may be given as follows:

$$V_{shunt} = ILED \cdot R_s$$

On the other hand, if the controlled variable 1204 of the converter 1 comprises a load voltage, then the sensing circuit 1207 may comprise a resistive voltage divider being arranged in parallel to the LED load 3.

In response to the load voltage (i.e., controlled variable) 1204, a voltage 1206 being indicative of the same will emerge across a portion of the (high-resistance) voltage divider.

FIG. 5 illustrates a feedback path in accordance with the present disclosure.

At a beginning of the feedback path, a sensing circuit 1207 of FIGs. 3 or 4 is arranged for providing a voltage 1206 being indicative of the controlled variable 1204 of the converter 1.

Further along the feedback path, the sensing circuit 1207 may comprise a low-pass filter 1209 for de-noising a magnitude of the voltage 1206.

Further along the feedback path, the sensing circuit 1207 may comprise an operational amplifier 1208 for amplifying the magnitude of the voltage 1206.

Given the gain $g_{op}$ of the operational amplifier, the VCO input voltage 1206', $V_{vco\_in}$ may be calculated as follows:

$$V_{vco\_in} = V_{shunt} \cdot g_{op} = ILED \cdot R_s \cdot g_{op}$$

Further along the feedback path, a voltage-controlled oscillator (VCO) 1205 is arranged for providing an oscillation signal 1203, 1103 having a frequency in accordance with the magnitude of the voltage 1206, 1206' being indicative of the controlled variable 1204 of the converter 1.

For example, the transfer characteristics of the VCO 1205 may be described as follows:

$$f_{Vvco\_out} = f\left(V_{vco\_in}\right) = \frac{\left(2\ MHz - 1\ MHz\right)}{\left(3.3\ V - 0\ V\right)} \cdot V_{vco\_in} + 1\ MHz$$

Combining the equations above, the frequency of the VCO output voltage 1203, $V_{vco\_out}$ may be calculated as follows:

$$f_{Vvco\_out} = \frac{\left(2\ MHz - 1\ MHz\right)}{\left(3.3\ V - 0\ V\right)} \cdot ILED \cdot R_s \cdot g_{op} + 1\ MHz$$

Further along the feedback path, a second transformer 1202, 1102 is provided for an inductive signal transfer of said oscillation signal 1103, 1203 from the secondary-side circuit 12 to the primary-side circuit 11.

The oscillation signal 1103 may have an unipolar magnitude. e.g., alternating between 0V and +3.3V, in which case the oscillation signal 1103 may directly serve as the indication 1103' of the controlled variable 1204 of the converter 1.

Alternatively, the oscillation signal 1103 may have a bipolar magnitude, e.g., alternating between - 3.3V and +3.3V. As negative voltages cannot be fed to the control circuit (i.e., ASIC) 1107, the converter 1 may further comprise a diode 1108 interposed between the second transformer 1102, 1202 and the control circuit 1107 for providing the (rectified) indication 1103' of the controlled variable 1204 of the converter 1.

As the second transformer 1102, 1202 and the rectifier diode 1108 (if any) do not change the frequency the following relationship can be given:

$$f_{Vsns\_in} = f_{Vsns} = f_{Vvco\_out}$$

At an ending of the feedback path, the control circuit 1107 is arranged for providing the actuating variable 1106 of the converter 1 in accordance with the indication 1103', 1103 of the controlled variable 1204 of the converter 1 (and an indication 1103" of a reference variable of the converter 1).

Combining the equations above, the oscillation period $T_{Vsns\_in}$ of the sensing signal 1103', $V_{sns\_in}$ may be calculated as follows:

$$T_{Vsns\_in} = \frac{1}{f_{Vsns\_in}} = \frac{1}{\frac{(2\ MHz - 1\ MHz)}{(3.3\ V - 0\ V)} \cdot ILED \cdot R_s \cdot g_{op} + 1\ MHz}$$

Solving this equation for $I_{LED}$ yields:

$$ILED = \frac{\left(\frac{1}{T_{Vsns\_in}} - 1\ MHz\right)}{R_s \cdot g_{op}} \cdot \frac{(3.3\ V - 0\ V)}{(2\ MHz - 1\ MHz)}$$

Given $R_s$ = 3,3$\Omega$ and $g_{op}$ = 1 the following exemplary values may be obtained for $I_{LED}$ (depending on the period $T_{Vsns\_in}$ of the sensing signal):

$$ILED(0.5\ \mu s, 3.3\ \Omega, 1) = 1\ A$$

$$ILED(0.667\ \mu s, 3.3\ \Omega, 1) = 0.499\ A$$

$$ILED(1\ \mu s, 3.3\ \Omega, 1) = 0\ A$$

As can be seen, the load current value can be calculated by the equations presented above. This calculation can be implemented within an ASIC or microcontroller in order to calculate the load current based on the measured period of the sensing signal 1103', $V_{sns\_in}$. The calculated load current then is the feedback / measurement value of the control loop. Clearly, the control loop could also work with period (or frequency) values rather than load current values. In that case the target load current value needs to be converted into a target period (or frequency) value of the sensing signal. The control loop then would have to use that target value and compare it to the measured value.

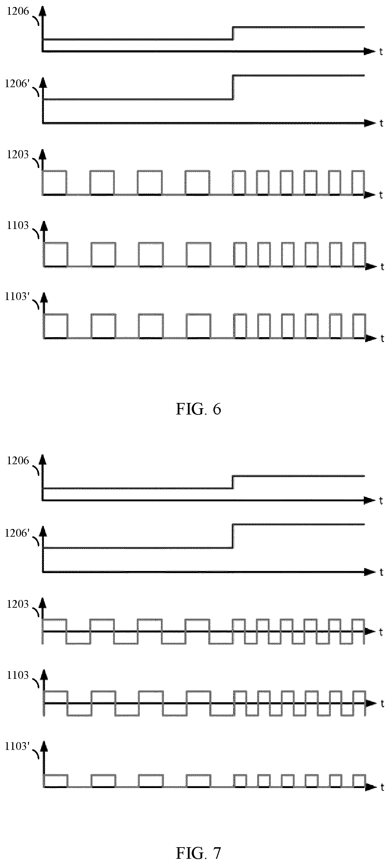

FIGs. 6 and 7 respectively illustrate example waveforms for different VCO output voltage ranges.

Both relate to the scenario of FIG. 3 wherein the controlled variable 1204 of the converter 1 comprises a load current.

The sensing circuit 1207 translates different levels of the load current 1204 into different levels of the voltages 1206, 1206' being indicative of the controlled variable 1204 of the converter 1.

In FIG. 6 an output voltage 1203 of the VCO 1205 oscillates between 0V and +3.3V, whereas in FIG. 7 the output voltage 1203 of the VCO 1205 oscillates between -3.3V and +3.3V. In both examples the voltage is rectangular, but could be also e.g. sinusoidal.

It applies to both FIGs. that a low (high) load current 1204 and therefore a low (high) shunt voltage 1206 translates into a low (high) VCO input voltage 1206' and further into a low (high) frequency of the VCO output voltage 1203. As can be seen, the signals 1103 (oscillation signal) and 1103' (the indication of the controlled variable 1204 of the converter 1) have a same frequency, as the second transformer 1202, 1102 (and the diode 1108, if any) do/does not change the frequency.

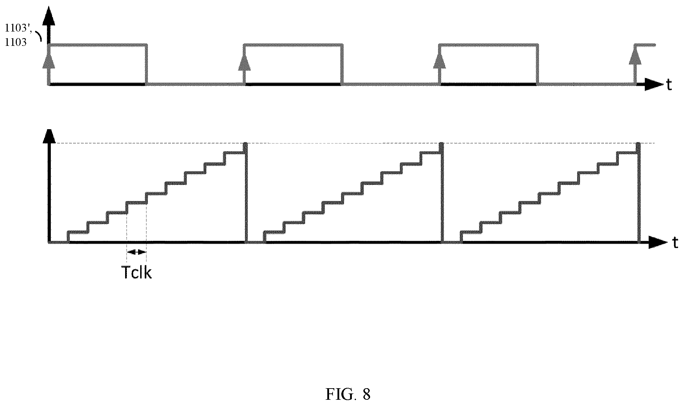

FIG. 8 illustrates a measurement of an oscillation period of an indication 1103', 1103 of a controlled variable 1204 of an isolated converter 1 in accordance with the present disclosure.

This measurement may be carried out in the control circuit 1107 (i.e., ASIC) by means of a counter. Whenever a rising edge of the input signal 1103', 1103 is detected, the current counter value is latched (i.e., stored), reset to zero, and incremented at each ASIC clock cycle (with period $T_{clk}$). The latched counter value is proportional to a duration of the oscillation period of the indication 1103', 1103 of the controlled variable 1204 and may thus be used to calculate the load current 1204.

Similar considerations apply in case of the scenario of FIG. 4 wherein the controlled variable 1204 of the converter 1 comprises a load voltage.

**Claims**

1. An isolated power converter (1) for supplying an LED load (3), the converter (1) comprising

    a first transformer (1101, 1201) for an inductive power transfer from a primary-side circuit (11) to a secondary-side circuit (12);
    a second transformer (1102, 1202) for an inductive signal transfer of an oscillation signal (1203, 1103) from the secondary-side circuit (12) to the primary-side circuit (11);
    the primary-side circuit (11) comprising
    a switching circuit (1104) for intermittent power input from a direct-current, DC, power source (1105) of the converter (1) in accordance with an actuating variable (1106) of the converter (1); and
    a control circuit (1107) for providing the actuating variable (1106) of the converter (1) in accordance with an indication (1103', 1103) of a controlled variable (1204) of the converter (1) and an indication (1103") of a reference variable of the converter (1);
    the secondary-side circuit (12) comprising
    a voltage-controlled oscillator, VCO (1205), for providing the oscillation signal (1203, 1103) having a frequency in accordance with a magnitude of a voltage (1206, 1206') being indicative of the controlled variable (1204) of the converter (1); and
    a sensing circuit (1207) for providing the voltage (1206, 1206') being indicative of the controlled variable (1204) of the converter (1).

2. The converter (1) of claim 1,
   the frequency of the oscillation signal (1203, 1103) being proportionate to the magnitude of the voltage (1206, 1206') being indicative of the controlled variable (1204) of the converter (1).

3. The converter (1) of claim 1 or claim 2,
   the indication (1103', 1103) of the controlled variable (1204) of the converter (1) being proportionate to the frequency of the oscillation signal (1203, 1103).

4. The converter (1) of any one of the claims 1 to 3,
   the indication (1103', 1103) of the controlled variable (1204) of the converter (1) and the indication (1103") of the reference variable of the converter (1) respectively comprising one of: magnitude values, and frequency values.

5. The converter (1) of any one of the preceding claims,
   the sensing circuit (1207) further comprising an operational amplifier (1208) upstream of the VCO (1205).

6. The converter (1) of claim 5,
   the sensing circuit (1207) further comprising a low-pass filter (1209) upstream of the operational amplifier (1208).

7. The converter (1) of any one of the claims 1 to 6,

    the controlled variable (1204) of the converter (1) comprising a load voltage;
    the sensing circuit (1207) comprising a resistive voltage divider being arranged in parallel to the LED load (3).

8. The converter (1) of any one of the claims 1 to 6,

    the controlled variable (1204) of the converter (1) comprising a load current;
    the sensing circuit (1207) comprising a shunt resistor being arranged in series to the LED load (3).

9. The converter (1) of any one of the preceding claims,
   the actuating variable (1106) of the converter (1) comprising a switching frequency.

10. The converter (1) of any one of the preceding claims,

the control circuit (1107) comprising a lookup table for providing the actuating variable (1106) of the converter (1) in accordance with the frequency of the oscillation signal (1203, 1103) and a given type of the controlled variable (1204) of the converter (1).

**11.** The converter (1) of any one of the preceding claims,
the oscillation signal (1203, 1103) comprising one of: a square-wave signal, and a sine-wave signal.

**12.** The converter (1) of any one of the preceding claims,

the oscillation signal (1203, 1103) having an unipolar magnitude; or
the oscillation signal (1203, 1103) having a bipolar magnitude and the converter (1) further comprising a diode (1108) interposed between the second transformer (1102, 1202) and the control circuit (1107).

**13.** The converter (1) of any one of the claims 1 to 12,

the converter (1) comprising a flyback converter (1);
the switching circuit (1104) comprising a single switch; and
the primary-side circuit (11) further comprising an inductor (1104').

**14.** The converter (1) of any one of the claims 1 to 12,

the converter (1) comprising a resonant converter (1);
the switching circuit (1104) comprising a half-bridge of series-connected switches being operable in alternation; and
the primary-side circuit (11) further comprising a resonant tank circuit (1104').

**15.** An LED driver (2), comprising
an isolated power converter (1) of any one of the preceding claims for supplying an LED load (3) at output terminals of the LED driver.

FIG. 1

FIG. 2

FIG. 3

FIG. 4

FIG. 5

FIG. 6

FIG. 7

1103',
1103

Tclk

FIG. 8

**EP 4 369 587 A1**

Europäisches
Patentamt

European
Patent Office

Office européen
des brevets

# EUROPEAN SEARCH REPORT

Application Number

EP 22 20 6008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/083874 A1 (ZHUO YUE [CN] ET AL) 12 March 2020 (2020-03-12) * figure 3A * * paragraphs [0002] - [0006] * * paragraph [0020] * * paragraphs [0037] - [0052] * | 1-15 | INV. H02M3/335 H05B45/12 H05B45/24 |
| X | US 2016/359419 A1 (LIN TIEN-CHI [TW] ET AL) 8 December 2016 (2016-12-08) * paragraphs [0028], [0038], [0050]; figures 1,4,7A * | 1-15 | |
| A | EP 0 851 565 A2 (VLT CORP [US]) 1 July 1998 (1998-07-01) * column 8, lines 11-22; figures 7,8 * | 1-15 | |
| A | EP 3 244 696 A1 (HELVAR OY AB [FI]) 15 November 2017 (2017-11-15) * paragraph [0014]; figures 2,3 * | 1-15 | |

TECHNICAL FIELDS SEARCHED (IPC)

H02M
H05B

The present search report has been drawn up for all claims

| Place of search | Date of completion of the search | Examiner |
|---|---|---|
| The Hague | 31 March 2023 | Standaert, Frans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

## ANNEX TO THE EUROPEAN SEARCH REPORT
## ON EUROPEAN PATENT APPLICATION NO.

EP 22 20 6008

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2023

| Patent document cited in search report | | Publication date | Patent family member(s) | | Publication date |
|---|---|---|---|---|---|
| US 2020083874 | A1 | 12-03-2020 | NONE | | |
| US 2016359419 | A1 | 08-12-2016 | NONE | | |
| EP 0851565 | A2 | 01-07-1998 | CN | 1099530 A | 01-03-1995 |
| | | | DE | 69412013 T2 | 17-12-1998 |
| | | | EP | 0633651 A1 | 11-01-1995 |
| | | | EP | 0851565 A2 | 01-07-1998 |
| | | | JP | 2892280 B2 | 17-05-1999 |
| | | | JP | H07143747 A | 02-06-1995 |
| | | | US | 6208531 B1 | 27-03-2001 |
| EP 3244696 | A1 | 15-11-2017 | NONE | | |

EPO FORM P0459

For more details about this annex : see Official Journal of the European Patent Office, No. 12/82